# EUROPÄISCHE PATENTSCHRIFT

(11) **EP 2 860 062 B1**
(45) Veröffentlichungstag und Bekanntmachung des Hinweises auf die Patenterteilung: **25.03.2020**
(21) Anmeldenummer: 14187311.7
(22) Anmeldetag: 01.10.2014
(51) Int. Cl.: B60P 7/08

(54) **Ratschenspannvorrichtung**
Ratchet clamping device
Dispositif de tension de bruit

(30) Priorität: 10.10.2013 DE 202013104588 U
(43) Veröffentlichungstag der Anmeldung: 15.04.2015
(73) Patentinhaber: PWP SA, CH-1530 Payerne (CH)
(72) Erfinder: Gijsbers, Erik, 3232 Ins (CH)
(74) Vertreter: Müller, Enno

(56) Entgegenhaltungen:
- EP-A2- 1 642 683
- DE-U1-202012 100 152

## Beschreibung

Die Erfindung betrifft eine Ratschenspannvorrichtung nach den Merkmalen des Oberbegriffes des Anspruches 1.

Derartige Ratschenspannvorrichtungen sind bereits in verschiedener Hinsicht bekannt geworden. Es wird bspw. auf die EP 1 642 683 A2 verwiesen. Hinsichtlich der Lagerung der Ratschenwelle in dem Befestigungsteil, welches Rundöffnungen aufweist, die in dem genannten Stand der Technik von zylindrischen Abschnitten von Führungshülsen durchsetzt sind, und sodann radial innen bezüglich der Führungshülsen von der Ratschenwelle durchsetzt sind, hat sich nun gezeigt, dass ungeachtet der zylindrischen Führungshülsen im Bereich der Lagerung der Ratschenwelle in dem Befestigungsteil Beschädigungen aufgetreten sind.

Ausgehend von dem vorbeschriebenen Stand der Technik beschäftigt sich die Erfindung mit der Aufgabenstellung, eine Ratschenspannvorrichtung mit einer Ratschenwelle anzugeben, die im Hinblick auf eine Lagerung in dem Befestigungsteil günstig ausgebildet ist.

Diese Aufgabe ist beim Gegenstand des Anspruches 1 gelöst, wobei darauf abgestellt ist, dass in einer Längsrichtung der Ratschenwelle zwischen dem Ratschenzahnrad und dem Antriebsende eine Rundausbildung der Ratschenwelle vorgesehen ist und dass die Ratschenwelle im Bereich der Rundausbildung das Lagerungsauge durchsetzt. Es hat sich gezeigt, dass bei einer entsprechenden Rundausbildung der Ratschenwelle, dort, wo sie die Führungshülse und auch das Lagerungsauge des Befestigungsteils durchsetzt, eine deutlich höhere Dauerstandfestigkeit der Lagerung erreicht werden konnte. Die zum Teil mit sehr hohen Hebelkräften über das Antriebsende in die Ratschenwelle eingeleitete Momente können günstiger aufgenommen werden. Gleichwohl ist es noch möglich, das Ratschenzahnrad auf der Ratschenwelle günstig zu haltern.

Es ist bevorzugt, dass in dem Durchsetzungsbereich für das Ratschenzahnrad an der Ratschenwelle zwei gegenüberliegende Abflachungen ausgebildet sind. Die Ratschenwelle ist in dem Durchsetzungsbereich bevorzugt nicht vollständig mit Flachseiten ausgebildet, sondern weist weiter bevorzugt in einem Übergang der gegenüberliegenden Abflachungen jeweils einen Rundverlauf auf.

Auf einer Abflachung können weiter Halterungsausformungen ausgebildet sein. Diese können einen festen Sitz in Achsrichtung der Ratschenwelle des Ratschenzahnrades auf der Ratschenwelle unterstützen.

Eine Halterungsausformung kann in weiterer Einzelheit als quer zu einer Achsrichtung verlaufender, auf der Ratschenwelle ausgebildeter Vorsprung gebildet sein. Der Vorsprung kann aus dem Material der Ratschenwelle selbst herausgearbeitet sein. Es kann sich um sehr flache, quer zur Erstreckungsrichtung der Ratschenwelle verlaufende rippenartige Vorsprünge handeln.

Weiter ist bevorzugt, dass die Ratschenwelle an ihrem dem Antriebsende gegenüberliegenden Ende radial verjüngt ausgebildet ist. Ein Durchmesser des verjüngten Bereiches kann hierbei der Breite einer Abflachung entsprechen.

Darüber hinaus ist bevorzugt, dass zwischen dem Antriebsende und der Rundungsbildung ein radial vorstehender umlaufender Flansch an der Ratschenwelle ausgebildet ist.

Bevorzugt ist der genannte Flansch, sind weiter die genannten Abflachungen und/oder die Vorsprünge, jeweils materialeinheitlich integral an der Ratschenwelle ausgeformt. Die Ratschenwelle selbst kann bspw. ein Stahlschmiedeteil sein. An dem Übergang zwischen den Abflachungen zu der im Durchsetzungsbereich zu den Lageraugen ausgebildeten vollständigen Rundausbildungen der Ratschenwelle kann sind entsprechend eine Schulter ergeben, die bei einem Aufschieben des Ratschenzahnrades auf die Ratschenwelle - von dem dem Antriebsende gegenüberliegenden Ende - zugleich einen Anschlag bildet und damit eine vorbestimmte Position des Ratschenzahnrades auf der Ratschenwelle ergibt.

Nachstehend ist die Erfindung des Weiteren anhand der beigefügten Zeichnung, die jedoch lediglich ein Ausführungsbeispiel darstellt, erläutert. Hierbei zeigt:
- Fig. 1: eine Draufsicht auf eine Spannratsche;

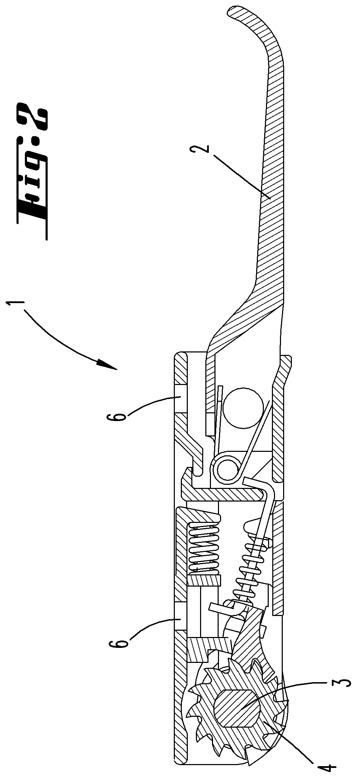

- Fig. 2: einen Querschnitt auf die Spannratsche gemäß Fig. 1, geschnitten entlang der Linie II-II;
- Fig. 3: einen weiteren Querschnitt der Spannratsche gemäß Fig. 1, geschnitten entlang der Linie III-III (Ratschenwelle nicht geschnitten);
- Fig.4: eine Draufsicht auf die Ratschenwelle in Alleinstellung; und
- Fig. 5: einen Querschnitt durch die Ratschenwelle gemäß Fig. 4, geschnitten entlang der Linie V-V in Fig. 4.

Dargestellt und beschrieben ist eine Ratschenspannvorrichtung 1, die zum Spannen von Gegenständen wie Gurten oder Planen an LKW-Fahrzeugen üblicherweise eingesetzt wird.

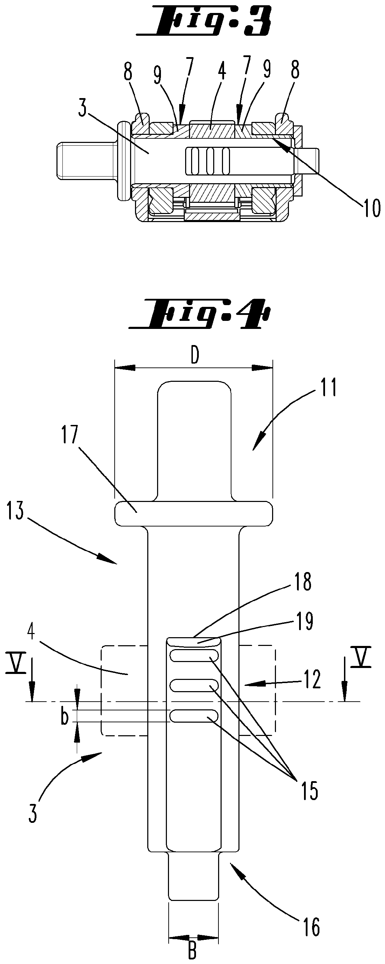

Die Ratschenspannvorrichtung 1 weist einen Ratschenhebel 2 auf, eine Ratschenwelle 3 (siehe auch Fig. 4), ein Ratschenzahnrad 4 und ein Befestigungsteil 5. Mittels des Befestigungsteils 5 wird die Ratschenspannvorrichtung 1 insgesamt an einem Chassis eines LKWs bspw. angebracht. Hierzu sind im Einzelnen in dem Befestigungsteil 5 bspw. Schraubverbindungslöcher 6 ausgebildet.

Zu dem Aufbau und der Funktionsweise der Ratschenspannvorrichtung 1 wird in weiterer Einzelheit auch auf die schon eingangs genannte EP 1642 683 A2 verwiesen, wobei der Offenbarungsgehalt dieser Druckschrift hiermit voll inhaltlich in die Offenbarung vorliegender Anmeldung einbezogen ist, auch um eines oder mehrere der in dieser Druckschrift offenbarten Merkmale in Ansprüche vorliegender Anmeldung einzubeziehen.

Das Ratschenzahnrad 4 ist in weiterer Einzelheit in dem Befestigungsteil 5 vermittels der Ratschenwelle 3 gelagert.

In weiterer Einzelheit sind hierzu auf der Ratschenwelle 3, wie sich etwa aus der Querschnittsdarstellung gemäß Fig. 3 ergibt, Führungshülsen 7 aufgebracht, welche Lagerungsaugen 8 des Befestigungsteils 5 durchsetzen. Eine Führungshülse 7 weist weiter bevorzugt einendig, darüber hinaus bevorzugt zugeordnet hinsichtlich der Anordnung dem Ratschenzahnrad 4 einen umlaufenden Flansch 9 und ein demgegenüber hinsichtlich des Außendurchmessers verjüngten Zylinderbereich 10 auf.

Ein Unterschied im Außendurchmesser der Führungshülse bezüglich des Flansches 7 einerseits und des Zylinderbereiches 10 andererseits beträgt bspw. 20 bis 40%. Der Außendurchmesser im Bereich des Zylinderabschnittes 10 ist um diesen Prozentanteil geringer als der Außendurchmesser im Bereich des Flansches 9. Die Ratschenwelle 3 weist weiter, wie bspw. auch aus Fig. 4 ersichtlich, ein Antriebsende 11 und einen Durchsetzungsbereich 12 für das Ratschenzahnrad 4 auf. Das Antriebsende 11 ist mit Abflachung, im Ausführungsbeispiel als Vierkant, ausgebildet. Es kann auch ausgehend von einer runden Gestaltung der Welle eine mittig entsprechend einer Durchmesserlinie durchgehende Aussparung aufweisen, so dass sich gegenüberliegende Abflachungen dort ausgebildet sind.

Weiter ist auch im Bereich des Durchsetzungsbereiches 12 eine Abflachung gegeben.

In Längsrichtung der Ratschenwelle 3 ist im montierten Zustand zwischen dem Ratschenzahnrad 4, das in Fig. 4 bspw. strichliniert angedeutet ist und dem Antriebsende 11 eine Rundausbildung der Ratschenwelle 3 in dem Abschnitt 13 vorgesehen. In diesem Abschnitt 13 durchsetzt die Ratschenwelle 3 auch das diesbezügliche Lagerungsauge 8 des Befestigungsteils 5, siehe Fig. 3.

Die Durchsetzung ist dort in Durchsteckanordnung zu der Führungshülse 7 gegeben.

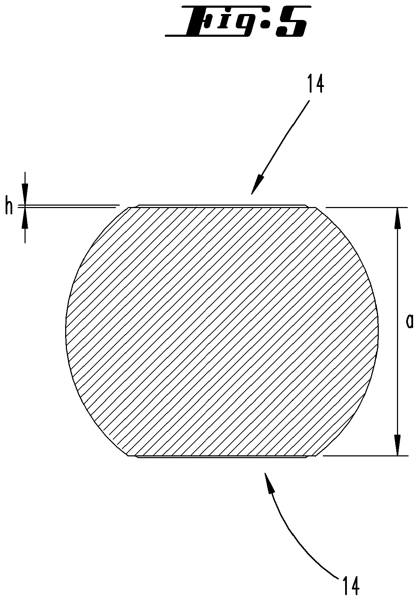

Der Durchsetzungsbereich 12 der Ratschenwelle 3 weist im Einzelnen, wie auch aus Fig. 5 ersichtlich, zwei gegenüberliegende Abflachungen 14 auf. Der Übergang in der Umfangskontur zwischen den Abflachungen 14 ist kreisbogenförmig gegeben, mit einem Radius, der dem Radius im Abschnitt 13 auch entspricht. Auf einer oder beiden Abflachungen 14 sind weiter bevorzugt auch Halterungsausformungen 15 ausgebildet. Die Halterungsausnehmungen 15 sind bevorzugt als quer zu einer Achsrichtung verlaufende Vorsprünge gebildet. Ein solcher Vorsprung, wie auch aus Fig. 5 ersichtlich, weist eine Höhe h auf, die sehr gering ist. Bezogen auf einen Abstand a gemessen in senkrechter Richtung zu einer Abflachung 14 zwischen den beiden gegenüberliegenden Abflachungen 14 beträgt die Höhe h einer Halterungsausformung 15 ein 2/100 bis 1/50 etwa des Maßes a. Beispielsweise kann das Maß a 10 bis 14 mm, weiter bevorzugt 12 mm betragen, und die Höhe h kann 0,1 bis 0,15 mm betragen. Eine Breite b einer Halterungsausformung 15 ist bevorzugt wesentlich größer als die Höhe h. Sie kann bspw. das 10- bis 40-fache der Höhe h betragen. Ein Absolutwert kann bspw. bei 1,5 bis 2,5, weiter bevorzugt bei 2 mm liegen.

Der Übergang von einer Abflachung 14 zu dem rund ausgebildeten Abschnitt 13 der Raschenwelle bildet zugleich auch eine Schulter 18 aus, an der das Ratschenzahnrad 4 beim Aufschieben auf die Ratschenwelle 3 zur Anlage kommen kann. Entsprechend sind bevorzugt zwei gegenüberliegende Schultern 18 ausgebildet.

In weiterer Einzelheit kann eine Schulter 18 in Richtung auf das Ratschenzahnrad 4 in einen Keilabschnitt 19 übergehen, dessen Fuß die eigentliche Anlage für das Ratschenzahnrad 4 beim Aufschieben bildet. Hierdurch kann sich nochmals eine günstige Beeinflussung der Dauerfestigkeit ergeben.

Die Ratschenwelle 3 weist weiter ein dem Antriebsende 11 gegenüberliegendes Ende 16 auf. Das Ende 16 ist bevorzugt vollständig rund gebildet. Weiter bevorzugt ist es radial verjüngt ausgebildet gegenüber dem Abschnitt 13. Ein Durchmesser des Endes 16 beträgt bevorzugt ein Drittel bis zwei Drittel, weiter bevorzugt etwa die Hälfte des Durchmessers im Abschnitt 13.

Das Ende 16 ragt bezüglich des Befestigungsteils 5 in Achsrichtung der Ratschenwelle 3 nach außen über. Es kann ergänzend außen anliegend an dem diesbezüglichen Lagerungsauge noch mit einer Lagerungsscheibe versehen sein. Darüber hinaus entspricht der Durchmesser des Endes 16 etwa der Breite B einer Abflachung 14.

Weiter bevorzugt ist in Längsrichtung der Ratschenwelle 3 zwischen dem Antriebsende 11 und dem Abschnitt 13 ein radial vorstehender umlaufender Flansch 17 ausgebildet. Der Flansch 17 weist bevorzugt einen Durchmesser D auf, der dem Anderthalbfachen oder mehr des Durchmessers der Ratschenwelle 3 im Abschnitt 13 entspricht. Beispielsweise bis hin zum Zwei- oder Dreifachen. Weiter bevorzugt entspricht der Durchmesser etwa dem 1,8-Fachen.

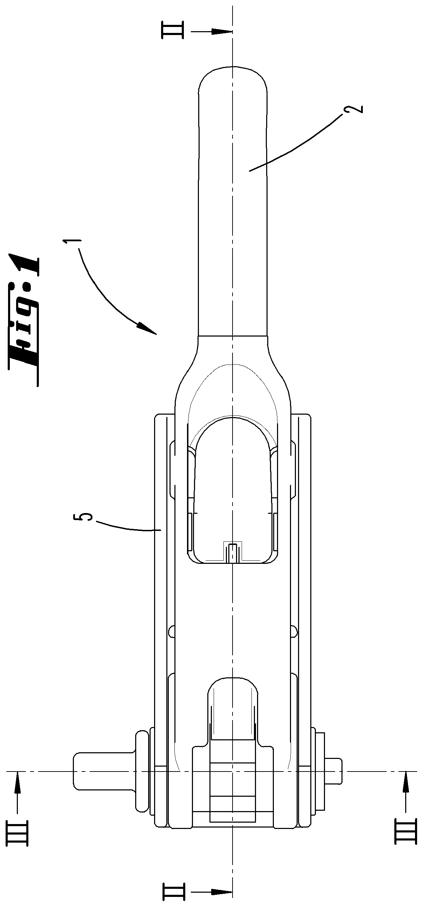

Der Flansch 17 ist bezüglich des Befestigungsteils 5 im montierten Zustand, wie auch etwa aus Fig. 1 ersichtlich, außerhalb des Befestigungsteils, von außen an dem entsprechenden Lagerungsauge anliegend, angeordnet.

**Bezugszeichenliste**

| | | | |
|---|---|---|---|
| 1 | Ratschenspannvorrichtung | | |
| 2 | Ratschenhebel | | |
| 3 | Ratschenwelle | a | Abmessung/ Abstand |
| 4 | Ratschenzahnrad | b | Breite |
| 5 | Befestigungsteil | B | Breite |
| 6 | Schraubverbindungsloch | D | Durchmesser |
| 7 | Führungshülse | h | Höhe |
| 8 | Lagerungsauge | | |
| 9 | Flansch | | |
| 10 | Zylinderabschnitt | | |
| 11 | Antriebsende | | |
| 12 | Durchsetzungsbereich | | |
| 13 | Abschnitt | | |
| 14 | Abflachung | | |
| 15 | Halterungsausformung | | |
| 16 | Ende | | |
| 17 | Flansch | | |
| 18 | Schulter | | |
| 19 | Keilabschnitt | | |

## Patentansprüche

1. Ratschenspannvorrichtung (1) zum Spannen von Gegenständen wie Gurten oder Planen, mit einem Ratschenhebel (2), einer Ratschenwelle (3), einem Ratschenzahnrad (4) und einem Befestigungsteil (5), wobei das Ratschenzahnrad (4) in dem Befestigungsteil (5) vermittels der Ratschenwelle (3), auf welchen Führungshülsen (7) aufgebracht sind, Lagerungsaugen (8) des Befestigungsteils (5) unter Durchsetzung auch der Führungshülsen (7) durchsetzend, gelagert ist, wobei weiter die Ratschenwelle (3) an einem Antriebsende (11) und in einem Durchsetzungsbereich für das Ratschenzahnrad (4) eine Abflachung aufweist, **dadurch gekennzeichnet, dass** in einer Längsrichtung der Ratschenwelle (3) zwischen dem Ratschenzahnrad (4) und dem Antriebsende (11) eine Rundausbildung der Ratschenwelle (3) vorgesehen ist, und dass die Ratschenwelle (3) im Bereich der Rundausbildung das Lagerungsauge (8) durchsetzt.

2. Ratschenspannvorrichtung nach Anspruch 1, **dadurch gekennzeichnet, dass** in dem Durchsetzungsbereich zwei gegenüberliegende Abflachungen (14) ausgebildet sind.

3. Ratschenvorrichtung nach einem der vorhergehenden Ansprüche, **dadurch gekennzeichnet, dass** auf einer Abflachung (14) Halterungsausformungen (15) ausgebildet sind.

4. Ratschenvorrichtung nach Anspruch 3, **dadurch gekennzeichnet, dass** eine Halterungsausformung (15) als quer zu einer Achsrichtung verlaufender Vorsprung gebildet ist.

5. Ratschenvorrichtung nach einem der Ansprüche 2 bis 4, **dadurch gekennzeichnet, dass** in Umfangsrichtung betrachtet zwischen den Abflachungen (15) Rundbereiche an der Ratschenwelle (3) ausgebildet sind.

6. Ratschenvorrichtung nach einem der vorhergehenden Ansprüche, **dadurch gekennzeichnet, dass** die Ratschenwelle (3) an ihrem dem Antriebsende (11) gegenüberliegenden Ende radial verjüngt ausgebildet ist.

7. Ratschenvorrichtung nach Anspruch 6, **dadurch gekennzeichnet, dass** ein Durchmesser des verjüngten Bereiches der Breite einer Abflachung (14) entspricht.

8. Ratschenvorrichtung nach einem der vorhergehenden Ansprüche, **dadurch gekennzeichnet, dass** zwischen dem Antriebsende (11) und der Rundausbildung ein radial vorstehender umlaufender Flansch (17) ausgebildet ist.

## Claims

1. Ratchet tensioning device (1) for tensioning objects such as belts or tarpaulins, comprising a ratchet lever (2), a ratchet shaft (3), a ratchet gear (4) and a fastening part (5), the ratchet gear (4) being mounted in the fastening part (5) by means of the ratchet shaft (3), to which guide sleeves (7) are attached, and which passes through bearing eyes (8) of the fastening part (5) and also through the guide sleeves (7), the ratchet shaft (3) also having a flattened portion at one drive end (11) and in a passage region for the ratchet gear (4), **characterised in that** a round formation of the ratchet shaft (3) is provided between the ratchet gear (4) and the drive end (11) in a longitudinal direction of the ratchet shaft (3), and **in that** the ratchet shaft (3) passes through the bearing eye (8) in the region of the round formation.

2. Ratchet tensioning device according to claim 1, **characterised in that** two opposing flattened portions (14) are formed in the passage region.

3. Ratchet device according to any of the preceding claims, **characterised in that** retaining formations (15) are formed on one flattened portion (14).

4. Ratchet device according to claim 3, **characterised in that** a retaining formation (15) is formed as a projection extending transversely to an axial direction.

5. Ratchet device according to any of claims 2 to 4, **characterised in that**, when viewed in the circumferential direction, round regions are formed on the ratchet shaft (3) between the flattened portions (15).

6. Ratchet device according to any of the preceding claims, **characterised in that** the ratchet shaft (3) is tapered radially at its end opposite the drive end (11).

7. Ratchet device according to claim 6, **characterised in that** the diameter of the tapered region corresponds to the width of a flattened portion (14).

8. Ratchet device according to any of the preceding claims, **characterised in that** a radially projecting circumferential flange (17) is formed between the drive end (11) and the round formation.

## Revendications

1. Dispositif tendeur à cliquet (1) pour tendre des objets tels que des courroies ou des bâches, comprenant un levier à cliquet (2), un arbre à cliquet (3), une roue dentée à cliquet (4) et une pièce de fixation (5), dans lequel la roue dentée à cliquet (4) est reçue dans la pièce de fixation (5) au moyen de l'arbre à cliquet (3) sur lequel sont agencées des douilles de guidage (7) et qui traverse des œillets de palier (8) de la pièce de fixation (5) en traversant aussi les douilles de guidage (7), dans lequel en outre l'arbre à cliquet (3) présente un méplat à une extrémité d'entraînement (11) et dans une zone de passage pour la roue dentée à cliquet (4), **caractérisé en ce qu'**une configuration circulaire de l'arbre à cliquet (3) est prévue dans une direction longitudinale de l'arbre à cliquet (3) entre la roue dentée à cliquet (4) et l'extrémité d'entraînement (11), et **en ce que** l'arbre à cliquet (3) traverse l'œillet de palier (8) dans la zone de configuration circulaire.

2. Dispositif tendeur à cliquet selon la revendication 1, **caractérisé en ce que** deux méplats opposés (14) sont formés dans la zone de passage.

3. Dispositif à cliquet selon l'une des revendications précédentes, **caractérisé en ce que** des formations/façonnements de maintien (15) sont formés sur un méplat (14).

4. Dispositif à cliquet selon la revendication 3, **caractérisé en ce qu'**une formation/façonnement de maintien (15) est réalisé en tant que saillie s'étendant transversalement à une direction axiale.

5. Dispositif à cliquet selon l'une des revendications 2 à 4, **caractérisé en ce que**, vu dans la direction circonférentielle, des zones circulaires sont formées sur l'arbre de cliquet (3) entre les méplats (15).

6. Dispositif à cliquet selon l'une des revendications précédentes, **caractérisé en ce que** l'arbre de cliquet (3) est formé en se rétrécissant radialement à son extrémité opposée à l'extrémité d'entraînement (11).

7. Dispositif à cliquet selon la revendication 6, **caractérisé en ce qu'**un diamètre de la partie se rétrécissant correspond à la largeur d'un méplat (14).

8. Dispositif à cliquet selon l'une des revendications précédentes, **caractérisé en ce qu'**une collerette circonférentielle (17) faisant saillie radialement est formée entre l'extrémité d'entraînement (11) et la configuration circulaire.
